# EUROPÄISCHE PATENTANMELDUNG

(11) **EP 2 695 555 A1**
(43) Veröffentlichungstag der Anmeldung: **12.02.2014**
(21) Anmeldenummer: 13178355.7
(22) Anmeldetag: 29.07.2013
(51) Int. Cl.: A47J 31/44

(54) **Vorrichtung zur Reinigung des Milchsystems bei Kaffeevollautomaten**

(30) Priorität: 08.08.2012 DE 102012214102
(71) Anmelder: BSH Bosch und Siemens Hausgeräte GmbH, 81739 München (DE)
(72) Erfinder: Ortmann, Christoph, 81675 München (DE); Sachon, Robert, 80469 München (DE)

(57) **Zusammenfassung**

Vorrichtung zur Reinigung eines Milchsystems bei Kaffeevollautomaten, mit einer Milchschaumdüse, mit einer mit der Milchschaumdüse fluidisch verbundenen Milchleitung zum Ansaugen einer Flüssigkeit aus einem Vorratsbehälter außerhalb des Kaffeevollauto-maten, wobei die Vorrichtung einen Reinigungsbehälter umfasst, der mit der Milchleitung fluidisch verbindbar ist und dessen Innendurchmesser nur wenig größer als der Außendurchmesser der Milchleitung ist.

## Beschreibung

Die Erfindung betrifft eine Vorrichtung zur Reinigung eines Milchsystems bei bzw. eines Kaffeevollautomaten, mit einer Milchschaumdüse und mit einer mit der Milchschaumdüse fluidisch verbundenen Milchleitung zum Ansaugen einer Flüssigkeit aus einem Vorratsbehälter außerhalb des Kaffeevollautomaten.

Zum Beispiel der Kaffeevollautomat "Bosch VeroBar 100" besitzt neben einer Kaffeeabgabeeinrichtung eine daneben angeordnete Milchschaumdüse. Sofern dem Kaffee Milch bzw. geschäumte Milch zugefügt werden soll, wird eine Milchleitung, welche mit der Milchschaumdüse verbunden ist, in einen Milchbehälter eingetaucht. Zum Bereiten des Milchschaums wird über die Milchleitung Milch aus dem Milchbehältern angesaugt und in der Milchschaumdüse aufgeschäumt, indem Luft mit der Milch vermischt wird. Der fertige Milchschaum wird über die Milchschaumdüse in das darunter stehende Gefäß abgegeben.

Zu Reinigungszwecken wird ein weitgehend beliebiger Wasserbehälter, beispielsweise eine Kaffeetasse, unter der Milchschaumdüse bereitgestellt, in den die Milchleitung hinein gesteckt wird. Anschließend gibt der Kaffeevollautomat über die Milchschaumdüse heißes Wasser in den Wasserbehälter ab. Das Wasser wird sodann - wie die Milch bei der Milchschaumproduktion - aus dem Wasserbehälter durch die Milchleitung und den Schlauch in die Milchschaumdüse gesogen und durch die Abgabeöffnung der Milchschaumdüse wieder in den Wasserbehälter ausgegeben. Dieser Kreislauf wird mehrmals durchlaufen. Bei dieser Vorgehensweise wird allerdings die noch mit Milch benetzte Milchleitung in das saubere Reinigungswasser eingesetzt, so dass die Milchschaumdüse mit bereits verschmutztem Wasser gereinigt werden muss. Dies beeinträchtigt den gewünschten Reinigungseffekt. Zudem können an der Milchleitung festsitzende Milchreste nicht immer ausreichend beseitigt werden, so dass es zu einer unerwünschten Keimbildung kommen kann.

Der vorliegenden Erfindung liegt die Aufgabe zugrunde, die Reinigungsleistung bei Kaffeevollautomaten zu verbessern.

Diese Aufgabe wird bei dem eingangs genannten Kaffeevollautomaten erfindungsgemäß durch einen speziellen Reinigungsbehälter erreicht, der mit der Milchleitung fluidisch verbindbar ist und dessen Innendurchmesser nur wenig größer als der Außendurchmesser der Milchleitung ist.

Der Reinigungsbehälter zeichnet sich dadurch aus, dass er mit der Milchleitung flüssigkeitsleitend verbindbar ist und sein Innendurchmesser nur 2, 4, 6 oder 10 mm größer als der Außendurchmesser der Milchleitung ist. Damit weist der erfinderische Reinigungsbehälter einerseits ein deutlich geringeres Volumen als bisherige Reinigungsbehälter auf. Andererseits umschließt der Reinigungsbehälter die Milchleitung sehr eng. Wird jetzt durch die in den Reinigungsbehälter eingesteckte Milchleitung zu Reinigungszwecken vom Kaffeevollautomaten erzeugtes heißes Wasser eingeleitet, kann es durch Zugabe von Luft versprudelt werden. Die entstehenden Luftblasen treten an einem unteren Ende der Milchleitung und damit in Bodennähe des Reinigungsbehälters in das Wasser aus. Sie steigen in dem engen Raum zwischen der Milchleitung und der Wandung des erfinderischen schmalen Reinigungsbehälters auf. Dabei reinigt das sprudelnde Wasser zwischen der Milchleitung und der Innenwand des Reinigungsbehälter, die die Milchleitung eng umgibt, die Außenseite der Milchleitung auch mechanisch. Die fluidische Verbindung wird folglich sowohl zum Einleiten des heißen Wassers in den Reinigungsbehälter als auch zum Entnehmen des verschmutzten Wassers aus dem Reinigungsbehälter genutzt. Nach der Reinigung der Milchleitung von innen und außen erfolgt dann die Reinigung der Milchschaumdüse in herkömmlicher Weise. Erst durch den geringen Zwischenraum zwischen Reinigungsbehälter und Milchleitung und die Versprudelung des Reinigungswassers kann gewährleistet werden, dass auch die Außenseite der Milchleitung in einem Maße gesäubert wird, das einer Keimbildung entgegenwirkt.

Der Reinigungsbehälter kann bei einer vorteilhaften Ausgestaltung mit einem Verschluss versehen sein, damit das Wasser beim Einfüllen oder beim Versprudeln nicht aus dem Reinigungsbehälter austritt. Die Luft dagegen, die das Wasser verdrängt, kann durch eine Membran, ein Lüftungsloch, eine Perforation oder durch ein luftdurchlässiges Material des Verschlusses entweichen. Dabei kann eine reversible Ausführung des Verschlusses gewählt sein, um die Milchleitung nach jedem Reinigungsprozess dem Reinigungsbehälter entnehmen, für einen folgenden Milchbereitungsprozess in den Milchbehälter überführen und für einen erneuten Reinigungsprozess wieder dichtend in den Reinigungsbehälter einsetzen zu können. Der Verschluss ist dabei so angeordnet, dass die Länge der zu reinigenden Milchleitung von der Länge des Reinigungsbehälters nur ein wenig übertroffen wird, so dass das Ende der Milchleitung, aus dem die Flüssigkeiten austreten bzw. durch das sie aufgenommen werden, beim Reinigungsprozess nicht selbstverschließend auf dem Boden des Reinigungsbehälters aufliegt.

Nach einer vorteilhaften Ausführung kann der reversible Verschluss in einer einfachen Ausführung als Stopfen oder Stöpsel ausgebildet sein, der konisch geformt und/oder in Richtung seines Durchmessers zumindest geringfügig kompressibel ist. Alternativ oder zusätzlich kann er eine an seinem Umfang umlaufende Dichtlippe aufweisen, die den dichten Verschluss gegenüber dem Reinigungsbehälter herstellt. Der Stopfen kann mit der Milchleitung verbunden, insbesondere von ihr durchsetzt sein und ist so dimensioniert, dass er die Öffnung des Reinigungsbehälters vollständig abschließt.

Nach einer weiteren vorteilhaften Ausgestaltung der Vorrichtung kann ein zweiteiliger Verschluss vorgesehen sein, wobei ein erstes Verschlussstück an der Milchleitung und ein zweites Verschlussstück am Reinigungsbehälter angeordnet ist, und die beiden Verschlussstücke miteinander korrespondieren. So kann eine Schraubverbindung denkbar sein, ein Verschluss in Form einer Bajonettverbindung ist aufgrund der einfacheren Handhabbarkeit jedoch vorzuziehen.

Nach einer weiteren vorteilhaften Ausführung kann eine Halterung für den Reinigungsbehälter vorgesehen sein, in der der Reinigungsbehälter während des Reinigungsprozesses gehalten wird. Der Reinigungsbehälter ist gemäß der oben beschriebenen Ausgestaltung als dünnes, einseitig geschlossenes Röhrchen ausgebildet, das wie ein Reagenzglas im Verhältnis zu seinem Querschnitt lang bzw. hoch geformt ist. Er verfügt damit über eine wenn überhaupt nur geringe Aufstandfläche, die kaum einen sicheren Stand bietet. Die Halterung sorgt für einen sicheren Halt des Reinigungsbehälters, damit das eingefüllte Wasser nicht aus der Öffnung austritt, sofern kein Verschluss zur Anwendung kommt, insbesondere während des Einblasens von Luft zum Versprudeln der Reinigungsflüssigkeit.

Nach einer weiteren vorteilhaften Ausführung kann die Halterung am oder im Kaffeevollautomaten befestigt werden, also in den Kaffeevollautomaten integriert sein. Zur Befestigung am Kaffeevollautomaten können Saugnäpfe, Haken, Schienen, Ösen oder dergleichen oder eine anhängende Tasche vorgesehen sein. Bei einer Integration kann eine Aufnahme des Reinigungsbehälters in eine eigens für den Reinigungsbehälter vorgesehene und an diesen in ihren Dimensionen angepasste Öffnung im Kaffeevollautomaten oder eine einteilige oder einstückige Ausführung des Reinigungsbehälters mit dem Gehäuse des Kaffeevollautomaten vorgesehen sein. In vorteilhafter Weise kann der Reinigungsbehälter aber zum Zweck seiner Reinigung entnehmbar sein.

Nach einer weiteren vorteilhaften Ausführung kann die Halterung sich als selbständiges Element darstellen. Dabei kann die Halterung unabhängig vom Kaffeevollautomaten sein und neben diesem auf der gleichen Fläche wie der Kaffeevollautomat oder auf einem Abtropfgitter des Kaffeevollautomaten abstellbar sein. Die Halterung ist so ausgebildet, dass sie eine weitgehend senkrechte Anordnung des Reinigungsbehälters ermöglicht, so dass sein offenes oder mit einem reversiblen Verschluss versehenes Ende nach oben zeigt. Vorteilhaft kann auch eine einstückige Ausbildung der Halterung mit dem Reinigungsbehälter sein, die sich z.B. durch Anformen von Füßen an den Reinigungsbehälter oder eine Bodenplatte oder vergleichbares realisieren lässt.

In einer weiteren vorteilhaften Ausführung kann vorgesehen werden, dass die Halterung neben dem Reinigungsbehälter eine Kammer zum Auffangen von Schmutzwasser aufweist. Insbesondere, wenn die Halterung auf dem Abtropfgitter unterhalb der Milchschaumdüse platziert wird, kann so aus der Milchschaumdüse austretendes Schmutzwasser aus dem Reinigungsprozess aufgefangen werden. Dadurch kann die geräteinterne Tropfschale von zu großen Flüssigkeitsmengen entlastet werden, so dass eine zu häufige Entleerung der Tropfschale vermieden werden kann.

Nach einer weiteren vorteilhaften Ausführung kann die Kammer so dimensioniert sein, dass der Milchbehälter in sie eingesetzt werden kann. Die Kammer kann Abmessungen aufweisen, die ein passgenaues Einsetzen des Milchbehälters ermöglichen, beispielsweise eine gebräuchliche 1-Liter-Milchtüte. Nach einem Reinigungsprozess kann die Kammer von Schmutzwasser befreit und der Milchbehälter zur Produktion weiteren Schaums in die Kammer eingesetzt werden. Die saubere Milchleitung kann aus dem Reinigungsbehälter entnommen und in den in der gleichen Halterung einsetzbaren Milchbehälter eingeführt werden. Wenn der Milchbereitungsprozess abgeschlossen ist, wird der Milchbehälter entnommen und in den Kühlschrank verbracht. Die Halterung mit dem eingesetzten Reinigungsbehälter und der jetzt freigegebenen Kammer für Schmutzwasser steht für einen weiteren Reinigungsprozess zur Verfügung.

Die Kammer für Schmutzwasser kann auch separat und aus der Halterung entnehmbar ausgebildet sein, so dass sie im Wechsel mit dem Milchbehälter in die Halterung eingesetzt werden kann. Diese weitere Ausbildung hat den Vorteil, dass bei der Reinigung der Kammer von Schmutzwasser bzw. von Milchrückständen nicht die gesamte Halterung dem Reinigungsprozess zugeführt werden muss. Der Aufbau der Halterung kann sich dadurch außerdem vereinfachen, weil ihr Abschnitt zur Aufnahme der Kammer oder des Milchbehälters weniger aufwändig, beispielsweise nur gitter- oder rahmenförmig ausgebildet sein kann.

Das Prinzip der Erfindung wird im Folgenden anhand einer stark schematisierten Zeichnung beispielshalber noch näher erläutert. In der Zeichnung zeigen:
- Figur 1:: einen Kaffeevollautomaten nach dem Stand der Technik
- Figur 2:: eine erfindungsgemäße Vorrichtung zur Reinigung des Milchsystems bei Kaffeevollautomaten während der Milchschaumherstellung,
- Figur 3:: eine erfindungsgemäße Vorrichtung zur Reinigung des Milchsystems bei Kaffeevollautomaten während der Wasserzugabe zu Reinigungszwecken,
- Figur 4:: eine erfindungsgemäße Vorrichtung zur Reinigung des Milchsystems bei Kaffeevollautomaten während der Versprudelung zu Reinigungszwecken,
- Figur 5:: eine erfindungsgemäße Vorrichtung zur Reinigung des Milchsystems bei Kaffeevollautomaten während der Schmutzwasserabgabe,
- Figur 6:: eine erfindungsgemäße Vorrichtung zur Reinigung des Milchsystems bei Kaffeevollautomaten während der erneuten Milchschaumherstellung,
- Figur 7:: einen Kaffeevollautomaten im Wirkungszusammenspiel mit der erfindungsgemäßen Vorrichtung zur Reinigung des Milchsystems.

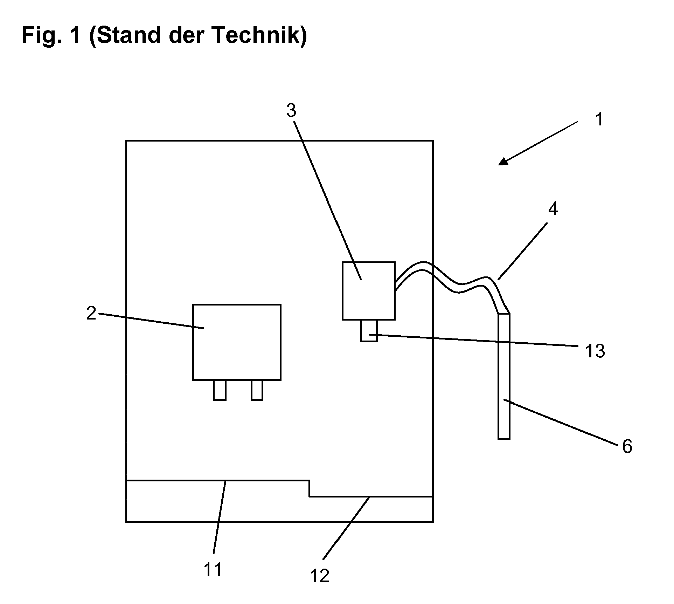

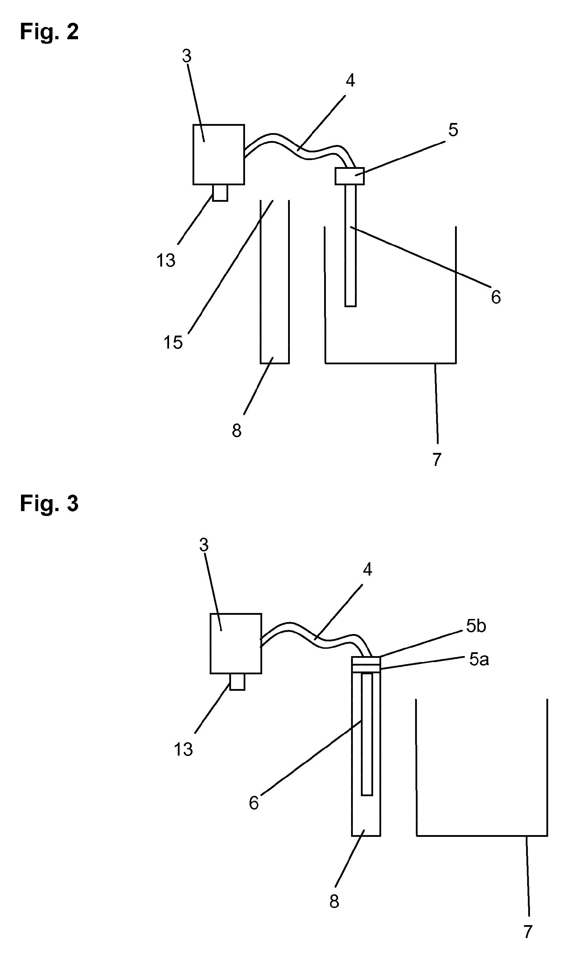

Ein an sich bekannter Kaffeevollautomat 1 weist nach Figur 1 auf einer Front- oder Bedienungsseite eine Kaffeeabgabeeinrichtung 2 und eine Milchschaumdüse 3 auf. Durch die Kaffeeabgabeeinrichtung 2 wird schwarzer Kaffee in ein unterhalb der Kaffeeabgabeeinrichtung auf einem Kaffeeabtropfgitter 11 stehendes, nicht dargestelltes Gefäß abgegeben. Zur Erzeugung von Kaffeegetränken, denen Milchschaum zugegeben wird, wird die Kaffeeabgabeeinrichtung 2 in den Bereich der Milchschaumdüse 3 verschwenkt, so dass Kaffee und Milchschaum in ein unter der Kaffeeabgabeeinrichtung 2 und der Milchschaumdüse 3 auf dem Milchabtropfgitter 12 stehendes Gefäß abgegeben werden können. An der Milchschaumdüse 3, die einen Auslass 13 aufweist, ist ein flexibler Milchschlauch 4 angeordnet, der seinerseits mit einem starren Milchrohr 6 verbunden ist. Der Milchschlauch 4 und das Milchrohr 6 bilden gemeinsam eine Milchleitung. Die Flexibilität des Milchschlauchs 4 gewährleistet eine möglichst große Bewegungsfreiheit der Milchleitung. Das starre Milchrohr 6 wird zum Ansaugen von Milch in einen Milchbehälter (siehe Figur 2) eingetaucht. Nach dem Ansaugen von Milch durch das Milchrohr 6 und den Milchschlauch 4 zur Milchschaumdüse 3 haften Reste der Milch insbesondere an der Außenseite des Milchrohrs 6 und trocknen dort bei längerem Nichtgebrauch an. Durch einfaches Spülen werden diese Reste in der Regel nicht entfernt, lediglich die Milchreste in dem Milchrohr 6 und im Milchschlauch 4 werden ausgespült.

Daher wird erfindungsgemäß eine Vorrichtung nach den Figuren 2 bis 6 vorgeschlagen. In Figur 2 ist die Vorrichtung zur Reinigung des Milchsystems des Kaffeevollautomaten 1 während des Milchschaumbereitungsprozesses und vor der Reinigung dargestellt. Die Milch aus einem Milchbehälter 7 wird wie bekannt mit Hilfe des in die Milch eingetauchten Milchrohrs 6 über den Milchschlauch 4 zur Milchschaumdüse 3 gesaugt und über den Auslass der Milchschaumdüse 13 in ein nicht dargestelltes Gefäß in Schaumform abgelassen. Es steht bereits ein erfindungsgemäßer Reinigungsbehälter 8 bereit, dessen Innendurchmesser mit 10 bis 15 mm nur wenig größer als der Außendurchmesser des Milchrohrs 6 ist.

Das Milchrohr 6 und der Milchschlauch 4 weisen an ihrer Verbindungsstelle einen Verschluss 5 auf, der in seinen Dimensionen und in seiner Gestalt an den Reinigungsbehälter 8 angepasst ist: der Verschluss 5 verschließt eine Öffnung 15 des Reinigungsbehälters wie ein abnehmbarer Deckel. Er umfasst ein Lüftungsloch für die vom Wasser verdrängte Luft.

Nach der Produktion des Milchschaums wird - wie in Figur 3 dargestellt - das Milchrohr 6 aus dem Milchbehälter 7 entnommen und in den bereit stehenden Reinigungsbehälter 8 eingesteckt. Der Milchbehälter 7 kann bei einer längeren unbenutzten Phase in einem Kühlschrank gelagert werden. Über den Verschluss 5 wird der Reinigungsbehälter 8 abgeschlossen. Der Reinigungsbehälter 8 umgibt das Milchrohr 6 derart, dass es an keiner Stelle an der Innenwand des Reinigungsbehälters 8 anliegt. Ist der Reinigungsbehälter 8 mit dem Verschluss 5 abgeschlossen, wird durch den Milchschlauch 4 und das Milchrohr 6 im Kaffeevollautomaten 1 hergestelltes heißes Wasser in den Reinigungsbehälter 8 eingeleitet. Zudem besteht der Verschluss 5 in dieser Figur aus zwei korrespondierenden Elementen, z. B. denen eines Bajonettverschlusses, wobei der Reinigungsbehälter 8 an seiner Öffnung 15 einen ersten Verschlussteil 5a aufweist, während der zweite Verschlussteil 5b an der Schnittstelle zwischen dem Milchrohr 6 und dem Milchschlauch 4 angeordnet ist.

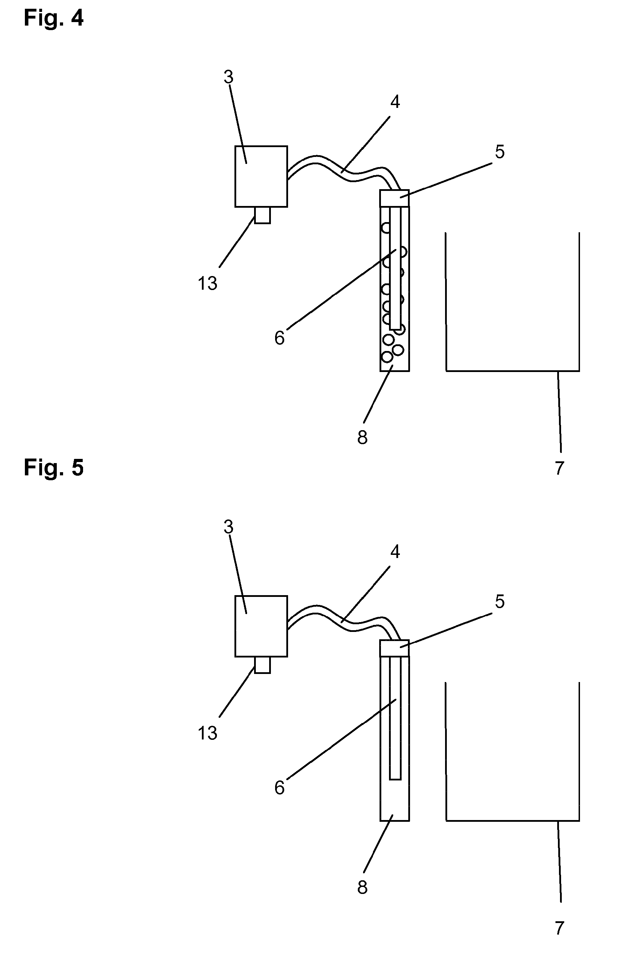

Nun oder nach einem ersten Spülen, Absaugen und erneuten Zuleiten von Heißwasser wird - wie in Figur 4 dargestellt - das Wasser im Reinigungsbehälter 8 aufgesprudelt, um an den Außenseiten des Milchrohrs 6 eine maximale Reinigungswirkung zu erzielen. Das heiße und wirbelnde Wasser löst dabei auch Anhaftungen angetrockneter Milch von der Außenseite des Milchrohrs 6 mechanisch ab. Der Verschluss 5 sorgt dafür, dass das sprudelnde Wasser nicht aus dem Reinigungsbehälter 8 überschwappt.

Sobald das Aufsprudeln des heißen Wassers im Reinigungsbehälter 8 erfolgt ist, wird nun das Schmutzwasser im Reinigungsbehälter 8 durch das Milchrohr 6, den Milchschlauch 4 und die Milchschaumdüse 3 sowie den Auslass der Milchschaumdüse 13 abgegeben (vgl. Figur 5). Die Abgabe des Schmutzwassers erfolgt über das in der Figur 5 nicht dargestellte Milchabtropfgitter 12 (vgl. Figur 1) in die darunter liegende, ebenfalls nicht dargestellte Tropfschale.

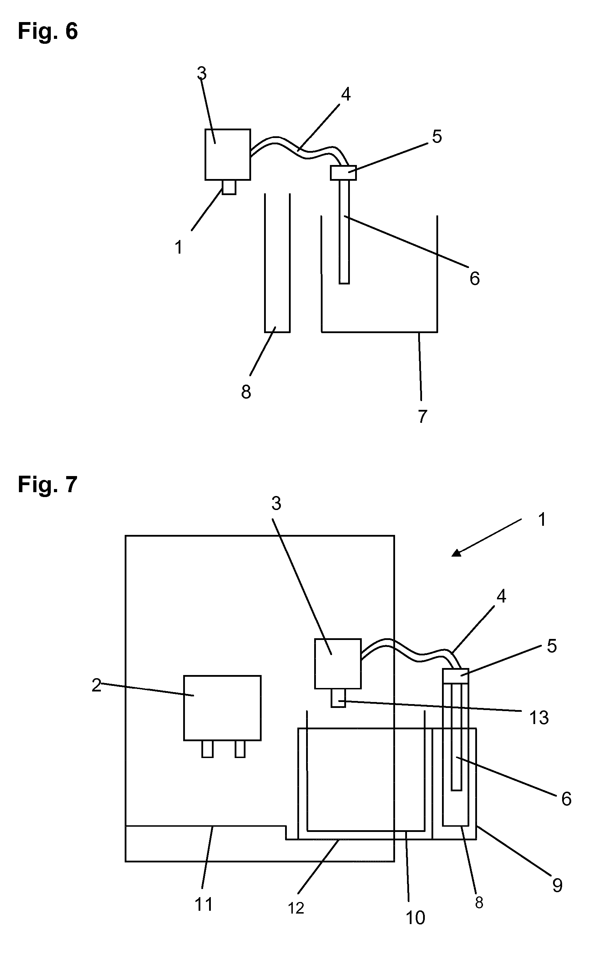

Sobald die Reinigung des Milchsystems abgeschlossen ist, kann eine erneute Milchschaumherstellung erfolgen, wenn - wie in Figur 6 dargestellt - das Milchrohr 6 wieder aus dem nun geleerten Reinigungsbehälter 8 entnommen und in den Milchbehälter 7 verbracht wird.

In Figur 7 wird eine vorteilhafte Ausgestaltung gezeigt, bei der die Vorrichtung zur Reinigung des Milchsystems des Kaffeevollautomaten 1 eine Halterung 9 aufweist, welche auf dem Milchabtropfgitter 12 des Kaffeevollautomaten 1 steht. In der Halterung 9 ist eine Kammer 14 vorgesehen, in der beim Reinigungsprozess aus dem Auslass 13 ausfließendes Schmutzwasser aufgefangen werden kann. Damit muss das Schmutzwasser beim Reinigungsvorgang des Milchsystems nicht mehr in die Tropfschale des Kaffeevollautomaten 1 abgegeben werden, deren Entleeren regelmäßig weniger bequem ist als das Leeren der kleineren und handlicheren Kammer 14 in der Halterung 9. Die Halterung 9 bietet auch die Möglichkeit der Aufnahme des Reinigungsbehälters 8, damit er für Reinigungszwecke möglichst in einer senkrechten Position gehalten wird. Der Reinigungsbehälter 8 ist vom Verschluss 5 verschlossen. Er wiederum hält das Milchrohr 6 in einer zentralen Position innerhalb des Reinigungsbehälters 8. Das Milchrohr 6 und die Milchschaumdüse 3 sind - wie oben beschrieben - über den Milchschlauch 4 miteinander verbunden. Zusätzlich kann - um die Kammer 14 vor zu starker Verschmutzung zu schützen - in die Kammer 14 ein Schmutzwasserbehälter 10 eingebracht werden, der nach der Reinigung und dem Auffangen des Schmutzwassers leicht entnommen und in einer Spülmaschine gereinigt werden kann. Der Schmutzwasserbehälter 10 ist weitgehend dimensionsgleich mit dem Milchbehälter 7 (vgl. Figuren bis 6), sodass der Halter 9 während der Kaffeezubereitung den Milchbehälter 7 und während eines Reinigungsvorgangs neben dem Reinigungsbehälter 8 den Schmutzwasserbehälter 10 aufnehmen kann.

Da es sich bei den vorhergehenden, detailliert beschriebenen Vorrichtungen zur Reinigung des Milchsystems bei Kaffeevollautomaten um Ausführungsbeispiele handelt, können sie in üblicher Weise vom Fachmann in einem weiten Umfang modifiziert werden, ohne den Bereich der Erfindung zu verlassen. Insbesondere kann die Art des Verschlusses verändert werden und die Anordnung des Reinigungsbehälters in anderer Form als in der hier beschriebenen erfolgen. Ebenso kann die Gestaltung des Reinigungsbehälters in einer anderen, beispielsweise exzentrischen Form ausgeführt werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach bzw. mehrmals vorhanden sein können.

### Bezugszeichenliste:

- 1: Kaffeevollautomat
- 2: Kaffeeabgabeeinrichtung
- 3: Milchschaumdüse
- 4: Milchschlauch
- 5: Verschluss
- 5a: Erster Verschlussteil
- 5b: Zweiter Verschlussteil
- 6: Milchrohr
- 7: Milchbehälter
- 8: Reinigungsbehälter
- 9: Halterung
- 10: Schmutzwasserbehälter
- 11: Kaffeeabtropfgitter
- 12: Milchabtropfgitter
- 13: Auslass der Milchschaumdüse 3
- 14: Kammer
- 15: Öffnung

## Patentansprüche

1. Vorrichtung zur Reinigung eines Milchsystems bei Kaffeevollautomaten (1), mit einer Milchschaumdüse (3), mit einer mit der Milchschaumdüse (3) fluidisch verbundenen Milchleitung zum Ansaugen einer Flüssigkeit aus einem Vorratsbehälter außerhalb des Kaffeevollautomaten(1), **gekennzeichnet durch** einen Reinigungsbehälter (8), der mit der Milchleitung fluidisch verbindbar ist und dessen Innendurchmesser nur wenig größer als der Außendurchmesser der Milchleitung ist.

2. Vorrichtung nach Anspruch 1, **gekennzeichnet durch** einen reversiblen Verschluss (5) an der Milchleitung, welcher derart ausgebildet ist, dass er den fluidisch verbundenen Reinigungsbehälter (8) verschließt.

3. Vorrichtung nach Anspruch 2, **dadurch gekennzeichnet, dass** der Verschluss (5) als Stopfen ausgebildet ist.

4. Vorrichtung nach Anspruch 2 oder 3, **dadurch gekennzeichnet, dass** der Verschluss (5) zweiteilig ausgebildet ist, wobei ein erstes Verschlussstück (5a) am Reinigungsbehälter angeordnet ist und ein zweites Verschlussstück (5b) an der Milchleitung angeordnet ist, und die beiden Verschlussstücke (5a, 5b) miteinander korrespondieren.

5. Vorrichtung nach Anspruch 4, **dadurch gekennzeichnet, dass** der Verschluss (5) als Bajonettverschluss ausgestaltet ist.

6. Vorrichtung nach einem der vorgenannten Ansprüche, **gekennzeichnet durch** eine Halterung (9) für den Reinigungsbehälter (8).

7. Vorrichtung nach den Ansprüchen 1 oder 2, **dadurch gekennzeichnet, dass** die Halterung (9) am Kaffeevollautomaten (1) befestigt oder im Kaffeevollautomaten (1) integriert ist.

8. Vorrichtung nach den Ansprüchen 1 oder 2, **dadurch gekennzeichnet, dass** die Halterung (9) separat bzw. unabhängig vom Kaffeevollautomaten (1) ausgebildet ist.

9. Vorrichtung nach einem der vorgenannten Ansprüche, **dadurch gekennzeichnet, dass** die Halterung (9) (zusätzlich zum Reinigungsbehälter (8)) eine Kammer (14) zum Auffangen von Schmutzwasser aufweist.

10. Vorrichtung nach einem der vorgenannten Ansprüche, **dadurch gekennzeichnet, dass** in die Kammer (14) ein entnehmbarer Milchbehälter (7) einsetzbar ist.
